# EUROPEAN PATENT APPLICATION

(11) **EP 0 742 151 A1**
(43) Date of publication of application: **13.11.1996**
(21) Application number: 96107394.7
(22) Date of filing: 09.05.1996
(51) Int. Cl.: B65B 51/22

(54) **Method and device for forming and axially closing a tubular wrapping**

(30) Priority: 10.05.1995 IT BO950211
(71) Applicant: AZIONARIA COSTRUZIONI MACCHINE AUTOMATICHE-A.C.M.A.-S.p.A., I-40131 Bologna (IT)
(72) Inventor: Spatafora, Mario, 40100 Bologna (IT)
(74) Representative: Jorio, Paolo

(57) **Abstract**

A method and device for forming and instantly axially closing a tubular wrapping (2) formed at least partly of heat-sealable material, whereby a product (3), housed in rotary manner inside a seat (11) and presenting a sheet (16) of wrapping material, is fed along a given path (P) and is rotated about its axis (34) to wind about itself a tubular wrapping (2) defined by the sheet (16) wound about the product (3) with its ends (16a, 16b) superimposed one on top of the other; an inductor circuit (41) is provided along the path (P); and the seat (11) presents an induced circuit (37) for supplying a sealing element (36), which is made of high-melt material of relatively high resistivity, and is located axially along the respective seat (11) and substantially contacting the superimposed ends (16a, 16b) of the sheet (16).

## Description

The present invention relates to a method of forming and axially closing a tubular wrapping.

The present invention may be applied to advantage in the food industry for forming tubular wrappings about flat products, normally preferably cylindrical sweets arranged side by side on edge and contacting one another.

The present invention is substantially an improvement to the method of forming tubular wrappings described in US Patent n. 5,024,046, to which full reference is made herein in the interest of full disclosure, and the main objects of the invention are to simplify the method whereby the wrappings are formed, and to provide a method of laterally sealing the wrappings and which, besides being effective, is such as to involve no delay in the wrapping formation cycle.

According to the present invention, there is provided a method of forming and axially closing a tubular wrapping, the method comprising the steps of winding a sheet, at least partly comprising heat-sealable material, about a respective product so that two opposite ends of the sheet are superimposed one on top of the other; bringing the wrapping, with its ends superimposed, substantially into contact with a sealing element extending axially along the wrapping; and heating the sealing element to join said superimposed ends; characterized in that the method also comprises the further step of feeding the product, the sheet and the sealing element along a path extending through a sealing station defined by an inductor circuit; the sealing element comprising a high-melt material of relatively high resistivity, preferably tungsten, and being connected to an induced circuit which is moved with the sealing element along said path and through the sealing station.

According to a preferred embodiment of the above method, the sheet is wound about the product by rolling as the product is fed along said path.

Preferably, the sheet is wound about the product by rolling the product in contact with a rolling body located along said path.

The present invention also relates to a device for forming and axially closing a tubular wrapping.

According to the present invention, there is provided a device for forming and axially closing a tubular wrapping formed about a product by means of a sheet at least partly comprising heat-sealable material and presenting two opposite ends; the device comprising at least one seat for receiving a product and said sheet; conveying means for feeding said seat along a given path; and operating means for rotating the product inside the seat and so winding the sheet about the product that said ends are superimposed one on top of the other and in a given position in the seat; the device being characterized by also comprising heating means located axially in relation to said seat in said given position, and which are brought substantially into contact with said superimposed ends; a sealing station in turn comprising an inductor circuit; and an induced circuit connected electrically to and movable with the heating means, which comprise a sealing element comprising a high-melt material of relatively high resistivity, preferably tungsten.

A non-limiting embodiment of the present invention will be described by way of example with reference to the accompanying drawings, in which:
Figure 1 shows a schematic side view of a preferred embodiment of a device for axially closing a tubular wrapping in accordance with the present invention;
Figures 2, 3 and 4 show larger-scale views of a detail in Figure 1 at three different operating stages;
Figures 5, 6 and 7 show larger-scale views in perspective of a detail in Figure 1 at the three stages in Figures 2, 3 and 4.

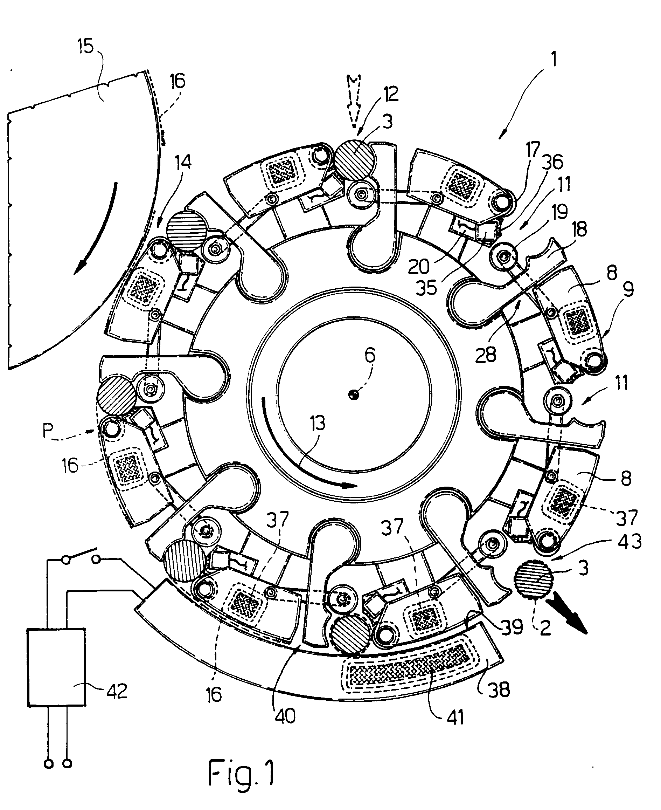

With reference to Figures 1 to 4, number 1 indicates a device for forming and axially closing tubular wrappings 2 about respective cylindrical products 3 comprising, in the example shown, groups of side by side cylindrical sweets.

Device 1 is substantially of the type described in said US Patent n. 5,024,046, and comprises a conveyor drum 4 defined by a disk 5, which is rotated about a central axis 6 by a known drive device (not shown) and presents a number of appendixes 7 extending radially outwards from the periphery of disk 5 and each supporting on its free end a suction segment 8 of a cylindrical outer jacket 9. Each two adjacent segments 8 define an axial opening 10 formed in jacket 9 and forming the inlet of a respective seat 11 for a respective product 3 supplied to drum 4 by a known feed device (not shown) located along the periphery of drum 4 at a loading station 12.

From station 12, drum 4 provides for feeding each product 3, along a substantially circular path P and in an anticlockwise direction (in Figure 1) shown by arrow 13, through a supply station 14 where a known suction roller 15 supplies and releases a sheet 16 of wrapping material so that one end (located downstream in the direction of arrow 13) of sheet 16 contacts respective segment 8, and the other end of sheet 16 contacts the outer periphery of respective product 3 across respective opening 10.

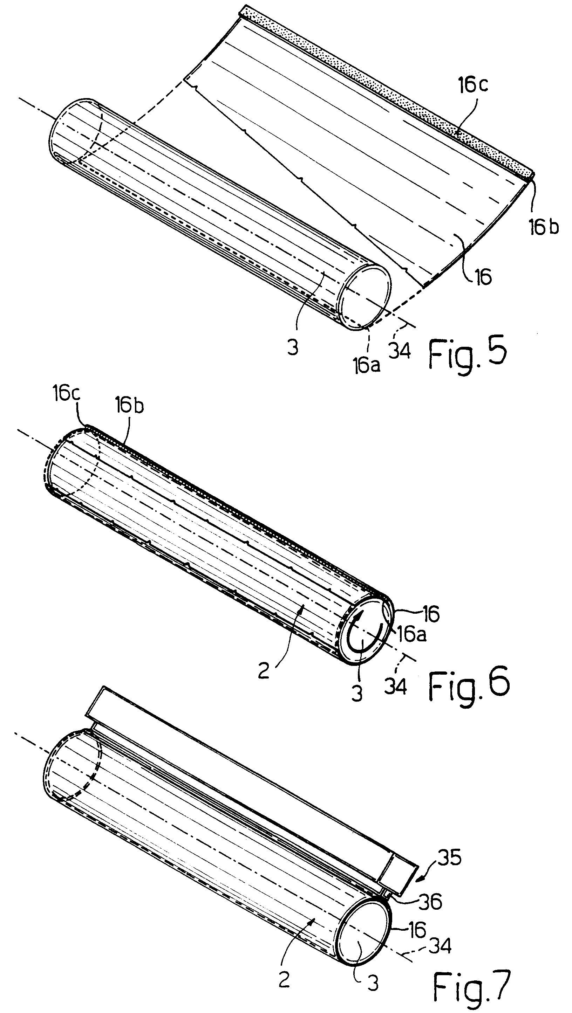

With reference to Figures 5, 6 and 7, sheet 16 presents two lateral portions 16a and 16b, which are superimposed one on top of the other when sheet 16 is wound about product 3, and comprises heat-sealable material at at least one of said lateral portions. In the example shown in Figure 5, said heat-sealable material comprises a gummed strip 16c located at portion 16b and which melts when heated to make portions 16a and 16b integral with each other.

Each seat 11 is defined by a lateral roller 17 and a lateral pad 18 opposite each other, and by an inner supporting roller 19 and an inner supporting block 20. More specifically, roller 17 is fitted to the rear end (in the direction of arrow 13) of respective segment 8, and rotates idly about a respective pin 21 parallel to axis 6 and fitted to segment 8; and roller 19 is fitted to a lever 22, and rotates idly about a respective pin 23 parallel to axis 6 and fitted to the free end of lever 22. By means of a pin 24 parallel to axis 6, lever 22 pivots on the segment 8 located upstream (in the direction of arrow 13) in relation to the segment 8 fitted with roller 17, and is moved by a spring 25 to and from an extracted position contacting a stop element 26 on said upstream segment 8.

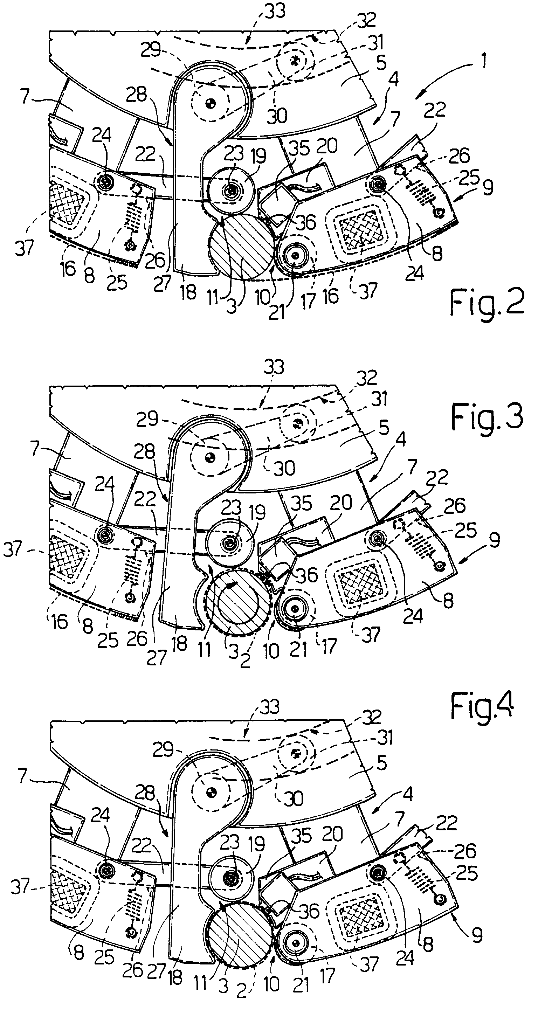

Pad 18 is connected integral with the end of one arm 27 of a rocker arm 28, which pivots on a pin 29 fitted to disk 5 and parallel to axis 6. Rocker arm 28 comprises a further arm 30 supporting on its free end a tappet roller 31 engaging the annular groove 32 of a fixed cam 33; and pad 18 is movable by cam 33 between an open position (Figure 3) permitting product 3 to be fed in and out of seat 11, a closed position (Figure 2) for clamping product 3 inside seat 11, and an intermediate position (Figure 4) in which pad 18 prevents product 3 from withdrawing from seat 11, but permits product 3 to rotate inside seat 11 about its own axis 34 parallel to axis 6, and to move slightly outwards of seat 11 and crosswise to axis 34.

Finally, block 20 is located inwards of roller 17 and is fitted integral with a sealing device 35 comprising a sealing element 36 extending parallel to axis 6 and along a given portion of the periphery of seat 11, and which comprises a high-melt material of relatively high resistivity, such as tungsten. Device 35 also comprises a connector for electrically connecting sealing element 36 to the output of an induced circuit 37 housed inside the downstream segment 8 in the direction of arrow 13.

Device 1 also comprises a rolling body 38 located along path P and downstream from station 14 in the direction of arrow 13, and which presents a concave surface 39 extending substantially in contact with the outer periphery of jacket 9 and along a given rolling arc. Body 38 is located at a sealing station 40, and houses an inductor circuit 41 connected to the mains by a central control unit 42 for regulating, in known manner, the frequency of the current in inductor circuit 41.

Operation of device 1 will now be described relative to one seat 11, and as of the instant in which seat 11 is fed in the direction of arrow 13, either in steps or continuously, towards loading station 12.

With reference to Figure 1, pad 18 reaches station 12 in the open position shown in Figure 3, to permit product 3 to be fed inside seat 11; and cam 33 is so formed that, as soon as seat 11 moves past station 12, pad 18 is moved into the closed position to retain product 3 inside seat 11 in opposition to the centrifugal force exerted, and wherein product 3 is gripped by pad 18 against rollers 17, 19 and block 20, and is located entirely within the outer periphery of jacket 9.

As it moves through station 14, the segment 8 located downstream from seat 11 in the direction of arrow 13 is supplied with and retains a front portion of a respective sheet 16, the rear portion of which projects from segment 8 and is positioned with end 16a contacting the outer surface of product 3 housed inside seat 11.

As seat 11 reaches the start, in the direction of arrow 13, of rolling body 38, cam 33 moves pad 18 into the intermediate position shown in Figure 4, so as to free product 3 and enable it to rotate about its axis 34 inside seat 11, as well as to move slightly outwards by virtue of roller 19. As a consequence of said outward movement, product 3, with end 16a of sheet 16 in between, is brought into contact with surface 39, and begins rolling to wind sheet 16 about itself until end 16b is superimposed on end 16a, thus forming wrapping 2.

Cam 33 restores pad 18 to the closed position upon superimposed ends 16a, 16b being positioned at sealing element 36, so as to maintain wrapping 2 in this position throughout the time in which induced circuit 37 travels past inductor circuit 41. The induced current generated in induced circuit 37 as this travels through the variable magnetic field generated by inductor circuit 41 provides for instantly heating sealing element 36, which in turn instantly melts gummed strip 16c to join ends 16a and 16b to each other. Obviously, in view of the material from which sealing element 36 is formed, sealing element 36 is cooled instantly upon induced circuit 37 leaving the field generated by inductor circuit 41.

Downstream from sealing station 40, cam 33 restores pad 18 to the open position to enable the wrapped product 3 to be released from seat 11 at unloading station 43.

## Claims

1. A method of forming and axially closing a tubular wrapping (2), the method comprising the steps of winding a sheet (16), at least partly comprising heat-sealable material, about a respective product (3) so that two opposite ends (16a, 16b) of the sheet (16) are superimposed one on top of the other; bringing the wrapping (2), with its ends (16a, 16b) superimposed, substantially into contact with a sealing element (36) extending axially along the wrapping (2); and heating the sealing element (36) to join said superimposed ends (16a, 16b); characterized in that the method also comprises the further step of feeding the product (3), the sheet (16) and the sealing element (16) along a path (P) extending through a sealing station (40) defined by an inductor circuit (41); the sealing element (36) comprising a high-melt material of relatively high resistivity, and being connected to an induced circuit (37) which is moved with the sealing element (36) along said path (P) and through the sealing station (40).

2. A method as claimed in Claim 1, characterized in that the sealing element (36) comprises tungsten.

3. A method as claimed in Claim 1 or 2, characterized in that the sheet (16) is wound about the product (3) by rolling as the product (3) is fed along said path (P).

4. A method as claimed in any one of the foregoing Claims, characterized in that the sheet (16) is wound about the product (3) by rolling the product (3) in contact with a rolling body (38) located along said path (P).

5. A device for forming and axially closing a tubular wrapping (2) formed about a product (3) by means of a sheet (16) at least partly comprising heat-sealable material and presenting two opposite ends (16a, 16b); the device comprising at least one seat (11) for receiving a product (3) and said sheet (16); conveying means (4) for feeding said seat (11) along a given path (P); and operating means (38) for rotating the product (3) inside the seat (11) and so winding the sheet (16) about the product (3) that said ends (16a, 16b) are superimposed one on top of the other and in a given position in the seat (11); the device being characterized by also comprising heating means (36) located axially in relation to said seat (11) in said given position, and which are brought substantially into contact with said superimposed ends (16a, 16b); a sealing station (40) in turn comprising an inductor circuit (41); and an induced circuit (37) connected electrically to and movable with the heating means (36), which comprise a sealing element (36) comprising a high-melt material of relatively high resistivity.

6. A device as claimed in Claim 5, characterized in that the sealing element (36) comprises tungsten.

7. A device as claimed in Claim 5 or 6, characterized in that said operating means (38) comprise a rolling body (38) located along said path (P) and which comes into contact with the product (3) to roll the product (3) inside said seat (11).
